# EUROPÄISCHE PATENTSCHRIFT

(11) **EP 0 806 157 B1**
(45) Veröffentlichungstag und Bekanntmachung des Hinweises auf die Patenterteilung: **11.07.2001**
(21) Anmeldenummer: 97107355.6
(22) Anmeldetag: 05.05.1997
(51) Int. Cl.: A44B 11/25, B60R 22/46

(54) **Gurtschloss für einen Sicherheitsgurt**
Buckle for a safety belt
Boucle pour ceinture de sécurité

(30) Priorität: 06.05.1996 DE 29608192 U
(43) Veröffentlichungstag der Anmeldung: 12.11.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- US-A- 3 680 913
- US-A- 3 722 909
- US-A- 3 895 196
- US-A- 4 004 115
- US-A- 4 266 325
- US-A- 4 402 114

## Beschreibung

Die Erfindung betrifft ein Gurtschloß für einen Sicherheitsgurt nach dem Oberbegriff des Anspruchs 1.

Bei bislang üblichen Gurtschlössern wird das dem Gurtschloß abgewandte Ende des Seilbefestigers mit dem Seil verpreßt, so daß ein Halteabschnitt entsteht. Vom Halteabschnitt aus erstreckt sich ein laschenartiger Fortsatz des Seilbefestigers bis in das Innere des Gehäuses des Gurtschlosses, wo der Seilbefestiger mittels Bolzen am Gehäuse befestigt ist. Derartige Seilbefestiger stehen jedoch gegenüber dem Gehäuse des Gurtschlosses axial sehr weit vor, so daß die bekannten Gurtschlösser samt Seilbefestiger sehr lang sind. Dies ist insbesondere bei Verwendung von Gurtstraffern nachteilig, da aufgrund des ohnehin geringen zur Verfügung stehenden Bauraums zu lange Gurtschlösser samt Seilbefestiger den möglichen maximalen Straffweg einschränken.

Aus der gattungsgemäßen US-A-4 004 115 ist ein Gurtschloß bekannt, das an einem Seil befestigt ist. Auf das Ende des Seiles, welches in das Innere des Gurtschloßgehäuses ragt, ist eine Buchse aufgepreßt. Eine separate Halteplatte greift hinter der Buchse an und wird am Gurtschloßgehäuse befestigt. Das Seil mit der Buchse kann dadurch nicht mehr aus dem Gurtschloßgehäuse herausgezogen werden. Diese Aufbau führt zu einer großen axialen Länge der Befestigung des Seiles am Gurtschloßgehäuse.

Die Erfindung schafft ein Gurtschloß mit einem daran angebrachten Seilbefestiger, der eine extrem kurze axiale Baulänge und eine geringe Tiefe aufweist, so daß die Unterbringung im Fahrzeug, insbesondere bei Verwendung eines Gurtstraffers erleichtert wird. Zudem kann durch die gewonnene axiale Baulänge der Straffweg eines Gurtstraffers vergrößert werden. Dies wird erfindungsgemäß durch ein Gurtschloß mit den Merkmalen des Anspruchs 1 erreicht. Das erfindungsgemäße Gurtschloß mit Seilbefestiger zeichnet sich dadurch aus, daß seitlich des Halteabschnitts des Seilbefestigers abstehende, abgeflachte Fortsätze angeformt sind, an denen unmittelbar die Bolzen angreifen, welche den Seilbefestiger mit dem Gehäuse verbinden. Es sind also gegenüber dem nächstkommenden Stand der Technik weniger Einzelteile erforderlich, zudem ist für die Verbindung von Seilbefestiger mit dem Gurtschloßgehäuse eine geringere axiale Baulänge erforderlich. Die Tiefe, die für die Befestigung notwendig ist, kann ebenfalls geringgehalten werden.

Ferner ist es möglich, den Seilbefestiger und das Gurtschloß so auszubilden, daß der Seilbefestiger in das Gurtschloß eingehängt oder in ihm verrastet werden kann.

Die vom Seilbefestiger auf das Seil übertragbare Zugkraft kann dadurch noch gesteigert werden, daß das gurtschloßseitige Ende des Seils gegenüber dem Halteabschnitt vorsteht und im vorstehenden Bereich aufgelöst ist. Durch das aufgelöste Ende des Seils wird der Seilquerschnitt gegenüber dem Seilquerschnitt im verpreßten Bereich erhöht, so daß sich das Ende des Seils stirnseitig am Seilbefestiger abstützt.

Bei Verwendung des Gurtschlosses mit einem Gurtstraffer weist der Seilbefestiger vorzugsweise Deformationsbereiche auf, die am Ende des Straffweges an ein Gegenstück anschlagen und dabei plastisch deformiert werden, wodurch sich beim Anschlagen des Seilbefestigers auftretende Kraftspitzen abbauen lassen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Draufsicht auf das erfindungsgemäße Gurtschloß mit Seilbefestiger,
Figur 2 eine Schnittansicht nach der Linie II-II in Figur 1, die die Mittel zum Arretieren des Seilbefestigers am Gurtschloß zeigen,
Figur 3 eine Draufsicht auf das erfindungsgemäße Gurtschloß mit Seilbefestiger gemäß einer zweiten Ausführungsform, in der der Seilbefestiger im Gehäuse des Gurtschlosses verrastet oder in es eingehängt ist,
Figur 4 eine Schnittansicht längs der Linie IV-IV in Figur 3, die die Verbindung des Seilbefestigers mit dem Gehäuse zeigt,
Figur 5 eine Figur 4 entsprechende Schnittansicht, die einen geringfügig modifizierten Seilbefestiger zeigt,
Figur 6 eine Draufsicht auf eine dritte Ausführungsform des erfindungsgemäßen Gurtschlosses mit Seilbefestiger,
Figur 7 eine Schnittansicht längs der Linie VII-VII in Figur 6;
Figur 8 eine Draufsicht auf eine vierte Ausführungsform des erfindungsgemäßen Gurtschlosses mit Seilbefestiger,
Figur 9 eine Seitenansicht des in Figur 8 gezeigten Gurtschlosses, und
Figur 10 eine Seitenansicht einer fünften Ausführungsform des erfindungsgemäßen Gurtschlosses, das gegenüber der in den Figuren 8 und 9 gezeigten Ausführungsform geringfügig abgewandelt ist.

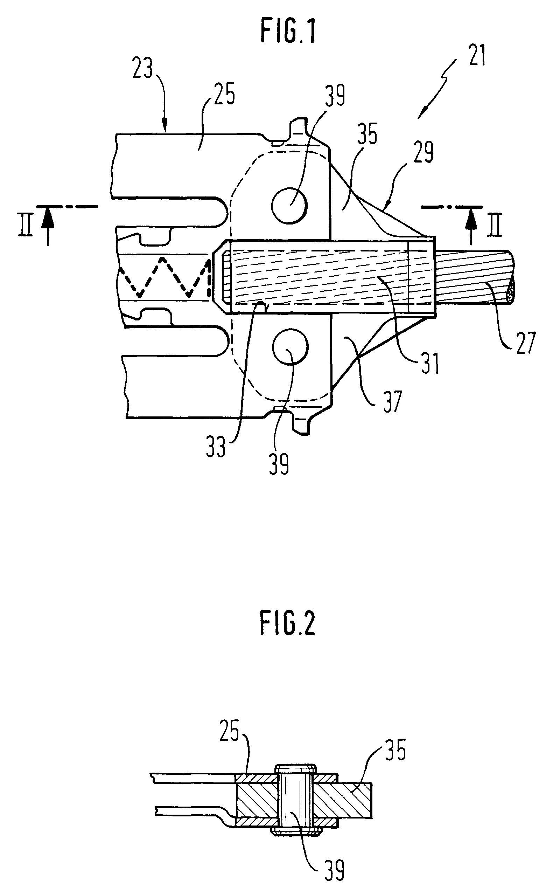

In Figur 1 ist eine sehr kurz bauende Einheit 21, bestehend aus einem Gurtschloß 23 mit einem Gehäuse 25 und einem Seil 27, das über einen Seilbefestiger 29 mit dem Gurtschloß 23 verbunden ist, gezeigt. Der Seilbefestiger 29 ist nicht lösbar an dem Seil 27 befestigt, indem er im Bereich des Halteabschnitts 31 verpreßt ist. Das Gehäuse 25 weist an seinem hinteren Ende eine schlitzförmige Ausnehmung 33 auf, in die sich der Halteabschnitt 31 erstreckt. Abgeflachte Fortsätze 35 und 37 ragen seitlich vom Halteabschnitt 31 in das Innere des Gehäuses 25, an dem sie mit Bolzen 39, wie in Figur 2 gezeigt, befestigt sind. Die Fortsätze 35 und 37 haben zur Befestigung des Seilverbinders zwei Durchgangsöffnungen. Durch die seitliche Anordnung der Durchgangsöffnungen und der als Mittel zum Arretieren des Seilbefestigers 29 am Gurtschloß 23 dienenden Bolzen 39 läßt sich die axiale Baulänge des Gurtschlosses 23 samt Seilbefestiger 29 insgesamt weiter verringern.

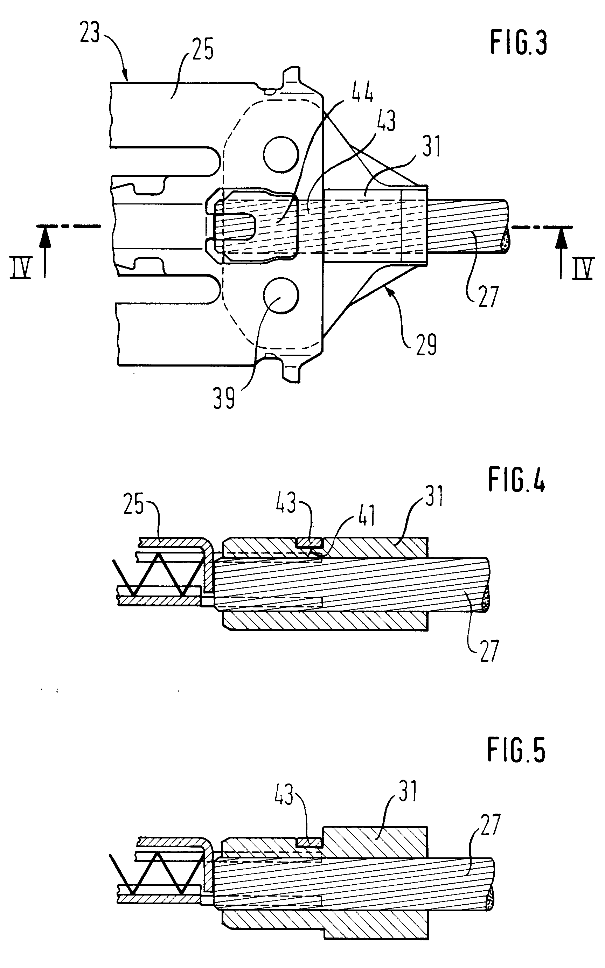

Zusätzlich zu der Befestigung mittels Bolzen 39 kann auch gemäß der in Figur 3 gezeigten Ausführungsform eine Verbindung des Seilbefestigers 29 mit dem Gurtschloß 23 dadurch erreicht werden, daß ein Einrastmechanismus vorgesehen ist. Der Seilbefestiger 29 weist hierzu an seiner Oberseite im Bereich des Halteabschnitts 31 eine quer zur Seillängsrichtung verlaufende Nut 41 auf (vgl. Figur 4), in die ein brückenartiges Rastteil 43 des Gehäuses 25 einrastet und den Seilbefestiger 29 verriegelt. Die Bolzen 39 sind als zusätzliche Mittel zum Arretieren ebenfalls vorgesehen. Anstatt der Rastverbindung kann auch eine hakenartige Verbindung zwischen Seilbefestiger 29 und Gurtschloß 23 vorgesehen sein, indem der mit 44 bezeichnete Bereich des Seilbefestigers 29 als Haken ausgebildet ist, der das Rastteil 43 erfaßt.

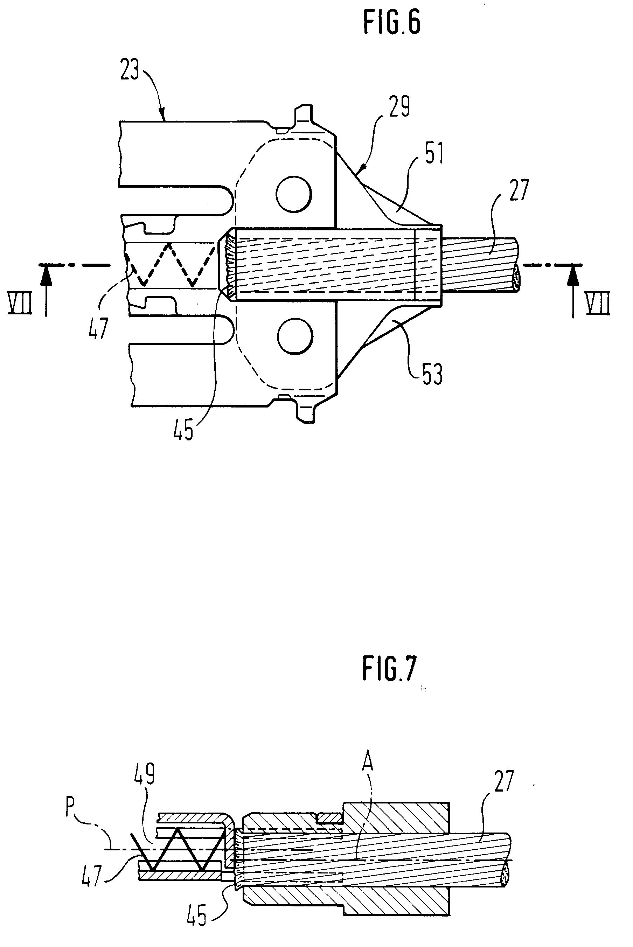

Die in Figur 4 gezeigte Ausführungsform des Seilbefestigers 29 unterscheidet sich von der in den Figuren 5 und 6 gezeigten Ausführungsform darin, daß bei letzterer der Seilbefestiger 29 in demjenigen Bereich des Halteabschnitts 31, der außerhalb des Gehäuses 25 angeordnet ist, eine größere Wandungsdicke als innerhalb des Gehäuses 25 aufweist, wodurch sich die Stabilität des Seilbefestigers 29 und die maximale auf das Seil 27 übertragbare Zugkraft vergrößern läßt.

Die maximale vom Seilbefestiger 29 auf das Seil 27 übertragbare Zugkraft läßt sich auch dadurch steigern, daß das gurtschloßseitige Ende des Seils 27 gegenüber dem Halteabschnitt 31 vorsteht und der Seilverbund in diesem Bereich aufgelöst ist. Der aufgelöste Bereich des Seils ist in Figur 7 mit 45 bezeichnet. Durch das Auflösen des Endes vergrößert sich der Seilquerschnitt, so daß sich das Seil 27 stirnseitig am Halteabschnitt 31 abstützt.

Um weiteren, insbesondere axialen Bauraum zu sparen, liegt eine Auswerferfeder 47 unmittelbar an der Stirnseite des gurtschloßseitigen Endes des Seils 27 an. Die Auswerferfeder 47 dient dazu, eine in das Gurtschloß 23 einklinkbare Steckzunge (nicht gezeigt) auf Tastendruck selbsttätig aus dem Gurtschloß 23 auszuwerfen.

Ferner muß der Seilbefestiger 29 zur Seilmittelachse A nicht, wie in den Figuren gezeigt, symmetrisch, sondern er kann unsymmetrisch ausgebildet sein, so daß sich seine Konstruktion gezielter auf die im Gurtschloß 23 vorhandenen, nicht bereits ausgefüllten Bauräume abstimmen läßt. Dies ist auch dadurch möglich, daß die Seilmittelachse A, wie in Figur 7 gezeigt ist, versetzt zu der Mittelachse P eines Steckzungen-Aufnahmeraums 49 angeordnet ist.

An dem dem Gurtschloß 23 abgewandten Ende des Seilbefestigers 29 sind an den Fortsätzen 35 und 37 flache Deformationsbereiche 51 bzw. 53 angeformt. Die Deformationsbereiche 51, 53 prallen bei Verwendung eines Gurtstraffers am Ende des Straffweges auf einen Anschlag, so daß sie plastisch verformt werden. Dadurch verringert sich die maximale auftretende Kraft beim Aufprall des Seilbefestigers 29 auf den Anschlag.

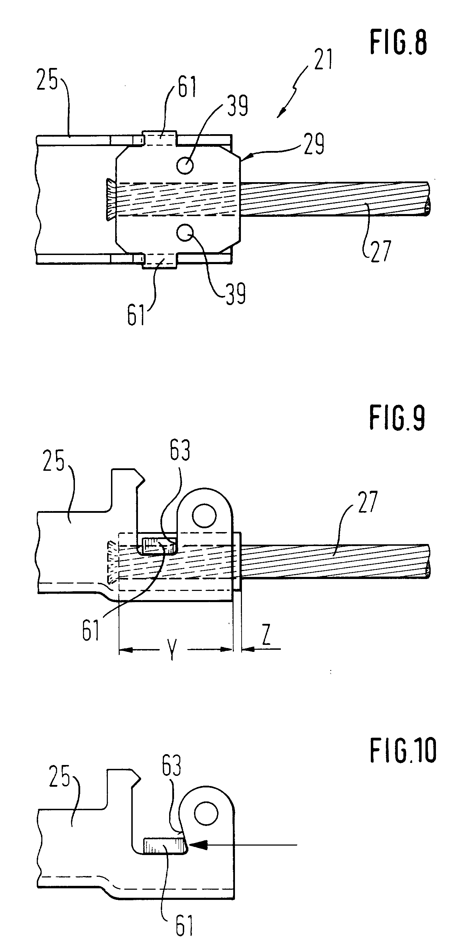

Bei der in Figur 8 gezeigten Ausführungsform weist das Gurtschloß ein U-förmiges Gehäuse 25 auf, auf das ein in Figur 8 nicht gezeigter Deckel aufgesetzt ist. Das U-förmige Gehäuse 25 weist an seinen Schenkeln, wie in Figur 9 besser zu erkennen ist, Ausnehmungen auf, in die zwei gegenüberliegende, seitlich vorstehende Zapfen 61 des Seilbefestigers 29 ragen. Der Seilbefestiger ist in dieser Ausführungsform in das Gehäuse 25 eingepreßt. Eine Anlagefläche 63, die auf einer Seite die Ausnehmung begrenzt, beträgt im Rückhaltefall die auf das Gurtschloß 21 ausgeübte Kraft auf den Seilbefestiger 29. Zusätzlich ist auch noch ein Verstemmen des Gehäuses 25 mit dem Seilbefestiger 29 möglich. Die besagte Preßlänge Y ist insgesamt relativ kurz. Der Seilbefestiger 29 ragt nur noch geringfügig (mit Länge Z bezeichnet) aus dem Gehäuse 25 heraus.

Bei der in Figur 10 gezeigten Ausführungsform ist die Anlagefläche 63 schräg aufwärts gerichtet und ragt teilweise über den Zapfen 61. Bei Zugbelastung auf das Gurtschloß 21 in Pfeilrichtung ergibt sich ein selbstsichernder Effekt, denn aufgrund der schrägen Anlagefläche 63 sind die Zapfen 61 bemüht, tiefer in die Ausnehmung im Gehäuse 25 zu dringen.

Die in den Figuren 1 bis 10 in verschiedenen Ausführungsformen gezeigte Einheit aus Gurtschloß und Seilbefestiger ist sehr kompakt aufgebaut und zeichnet sich durch eine geringe axiale Baulänge aus. Die gegenüber bislang üblichen Gurtschlössern samt Seilbefestigern gesparte Baulänge läßt sich dazu verwenden, den maximalen Straffweg eines Gurtstraffers zu erhöhen.

## Patentansprüche

1. Gurtschloß (23) für einen Sicherheitsgurt, mit einem daran angebrachten Seilbefestiger (29), der einen Halteabschnitt (31) aufweist, der mit einem gurtschloßseitigen Ende eines Seils (27) zur Verankerung des Gurtschlosses (23) am Fahrzeug oder am Fahrzeugsitz verpreßt ist, wobei das Gehäuse (25) des Gurtschlosses (23) eine Ausnehmung (33) hat, in die sich der Halteabschnitt (31) zumindest teilweise erstreckt, dadurch gekennzeichnet, daß der Halteabschnitt (31) des Seilbefestigers (29) sich seitlich erstreckende, abgeflachte Fortsätze (35, 37) aufweist, an denen Bolzen (39) angreifen, welche den Seilbefestiger (29) mit dem Gehäuse (25) verbinden.

2. Gurtschloß (23) nach Anspruch 1, dadurch gekennzeichnet, daß der Seilbefestiger (29) in das Gurtschloß (23) eingehängt oder in ihm verrastet werden kann.

3. Gurtschloß (23) nach Anspruch 2, dadurch gekennzeichnet, daß der Seilbefestiger (29) an seiner Oberseite eine quer zur Seilmittelachse (A) verlaufende Nut (41) aufweist, in die sich ein am Gehäuse (25) vorgesehenes Rastteil (43) erstreckt.

4. Gurtschloß (23) nach einem der vorstehenden Ansprüche, dadurch gekennzeichnet, daß der Halteabschnitt (31) außerhalb des Gehäuses (25) eine größere Wandungsdicke als innerhalb des Gehäuses (25) aufweist.

5. Gurtschloß (23) nach einem der vorstehenden Ansprüche, dadurch gekennzeichnet, daß das gurtschloßseitige Ende des Seils (27) gegenüber dem Halteabschnitt (31) vorsteht und in diesem Bereich (45) aufgelöst ist.

6. Gurtschloß (23) nach einem der vorstehenden Ansprüche, dadurch gekennzeichnet, daß der Seilbefestiger (29) zur Seilmittelalchse (A) unsymmetrisch ausgebildet ist.

7. Gurtschloß (23) nach einem der vorstehenden Ansprüche, dadurch gekennzeichnet, daß sich die Seilmittelachse (A) seitlich versetzt zur Mittelachse (P) eines Steckzungen-Aufnahmeraums (49) im Gehäuse (25) erstreckt.

8. Gurtschloß (23) nach einem der vorstehenden Ansprüche, dadurch gekennzeichnet, daß sich eine Auswerferfeder (47) für eine Steckzunge stirnseitig an dem gurtschloßseitigen Ende des Seils (27) oder des Seilbefestigers (29) abstützt.

9. Gurtschloß (23) nach einem der vorstehenden Ansprüche, dadurch gekennzeichnet, daß am Seilbefestiger (29) Deformationsbereiche (51, 53) vorhanden sind, die bei Verwendung eines Gurtstraffers am Ende des Straffweges bei einem Anschlag an ein Gegenstück plastisch deformiert werden.

10. Gurtschloß (23) nach einem der vorstehenden Ansprüche, dadurch gekennzeichnet, daß der Seilbefestiger (29) wenigstens einen seitlich abstehenden Zapfen (61) aufweist, der in eine Ausnehmung im Gehäuse (25) des Gurtschlosses (21) ragt.

11. Gurtschloß (23) nach Anspruch 10, dadurch gekennzeichnet, daß die Ausnehmung eine schräge Anlagefläche (63) aufweist, über die im Rückhaltefall eine Kraft auf den Zapfen (61) ausgeübt wird.

12. Gurtschloß (23) nach Anspruch 11, dadurch gekennzeichnet, daß die Anlagefläche (63) an einem Abschnitt des Gehäuses (25) vorgesehen ist, der den Zapfen (61) teilweise umfaßt.

13. Gurtschloß (23) nach einem der vorstehenden Ansprüche, dadurch gekennzeichnet, daß der Seilbefestiger (29) in das Gehäuse (25) eingepreßt ist.

## Claims

1. A belt buckle (23) for a safety belt, comprising a cable fixing device (29) attached thereto and having a retaining section (31) which is pressed with a belt buckle side end of a cable (27) for anchoring the belt buckle (23) to the vehicle or vehicle seat, the housing (25) of the belt buckle (23) having a recess (33) into which the retaining section (31) extends at least partly, characterized in that the retaining section (31) of the cable fixing device (29) has laterally extending, flattened extensions (35, 37) which are engaged by pins (39) connecting the cable fixing device (29) with the housing (25).

2. The belt buckle (23) according to claim 1, characterized in that the cable fixing device (29) can be nested in the belt buckle (23) or can be latched into place in it.

3. The belt buckle (23) according to claim 2, characterized in that the cable fixing device (29) has on its upper side a groove (41) running transversely to the center axis (A) of the cable and into which a latching part (43) provided on the housing (25) extends.

4. The belt buckle (23) according to any of the preceding claims, characterized in that the retaining section (31) has a greater wall thickness outside the housing (25) than inside the housing (25).

5. The belt buckle (23) according to any of the preceding claims, characterized in that the belt buckle side end of the cable (27) projects in relation to the retaining section (31) and is unraveled in this area (45).

6. The belt buckle (23) according to any of the preceding claims, characterized in that the cable fixing device (29) is asymmetrical in relation to the center axis (A) of the cable.

7. The belt buckle (23) according to any of the preceding claims, characterized in that the center axis (A) of the cable is laterally offset in relation to the center axis (P) of an insert tongue receiving space (49) in the housing (25).

8. The belt buckle (23) according to any of the preceding claims, characterized in that an ejector spring (47) for an insert tongue is supported on the front side of the belt buckle side end of the cable (27) or of the cable fixing device (29).

9. The belt buckle (23) according to any of the preceding claims, characterized in that deformation areas (51, 53) on the cable fixing device (29) are provided which, by use of a belt tensioner, are plastically deformed at the end of the tensioning path when striking against a counterpiece.

10. The belt buckle (23) according to any of the preceding claims, characterized in that the cable fixing device (29) has at least one laterally projecting stud (61) which protrudes into a recess in the housing (25) of the belt buckle (21).

11. The belt buckle (23) according to claim 10, characterized in that the recess has an oblique contact surface (63) via which a force is exerted on the stud (61) in the case of restraint.

12. The belt buckle (23) according to claim 11, characterized in that the contact surface (63) is provided on a section of the housing (25), which section partially surrounds the stud (61).

13. The belt buckle (23) according to any of the preceding claims, characterized in that the cable fixing device (29) is pressed into the housing (25).

## Revendications

1. Fermoir de ceinture (23) pour une ceinture de sécurité, comportant un organe de fixation de câble (29) monté sur celui-ci, qui présente une section de retenue (31) qui est comprimée avec une extrémité, située du côté du fermoir de ceinture, d'un câble (27) servant à l'ancrage du fermoir de ceinture (23) sur le véhicule ou sur le siège de véhicule, le boîtier (24) du fermoir de ceinture (23) ayant un évidement (33) dans lequel s'étend au moins en partie la section de retenue (31), caractérisé en ce que la section de retenue (31) de l'organe de fixation de câble (29) présente des prolongements (35, 37) aplatis s'étendant latéralement, sur lesquels s'engagent des boulons (39) qui relient l'organe de fixation de câble (29) au boîtier (25).

2. Fermoir de ceinture (23) selon la revendication 1, caractérisé en ce que l'organe de fixation de câble (29) peut être accroché dans le fermoir de ceinture (23) ou encliqueté dans celui-ci.

3. Fermoir de ceinture (23) selon la revendication 2, caractérisé en ce que l'organe de fixation de câble (29) présente sur sa face supérieure une rainure (41) qui s'étend perpendiculairement à l'axe central (A) du câble et dans laquelle s'étend une pièce d'encliquetage (43) prévue sur le boîtier (25).

4. Fermoir de ceinture (23) selon l'une quelconque des revendications précédentes, caractérisé en ce que la section de retenue (31) présente à l'extérieur du boîtier (25) une épaisseur de paroi plus grande qu'à l'intérieur du boîtier (25).

5. Fermoir de ceinture (23) selon l'une quelconque des revendications précédentes, caractérisé en ce que l'extrémité, situé du côté du fermoir de ceinture, du câble (27) fait saillie par rapport à la section de retenue (31) et est relâchée dans cette zone (45).

6. Fermoir de ceinture (23) selon l'une quelconque des revendications précédentes, caractérisé en ce que l'organe de fixation de câble (29) est réalisé de façon dissymétrique par rapport à l'axe central (A) du câble.

7. Fermoir de ceinture (23) selon l'une quelconque des revendications précédentes, caractérisé en ce que l'axe central (A) de câble s'étend dans le boîtier (25) de façon décalée latéralement par rapport à l'axe central (P) d'une chambre de réception (49) d'une languette d'emboîtement.

8. Fermoir de ceinture (23) selon l'une quelconque des revendications précédentes, caractérisé en ce qu'un ressort d'éjecteur (47) pour une languette d'emboîtement prend appui du côté frontal sur l'extrémité, située du côté du fermoir de 1a ceinture, du câble (27) ou de l'organe de fixation de câble (29).

9. Fermoir de ceinture (23) selon l'une quelconque des revendications précédentes, caractérisé en ce qu'il y a sur l'organe de fixation de câble (29) des zones de déformation (51, 53) qui, lorsqu'on utilise un raidisseur de ceinture, sont déformées plastiquement à la fin du trajet de raidissement en venant en butée sur une pièce opposée.

10. Fermoir de ceinture (23) selon l'une quelconque des revendications précédentes, caractérisé en ce que l'organe de fixation de câble (29) présente au moins un tenon (61) se dressant latéralement, qui pénètre dans un évidement du boîtier (25) du fermoir de ceinture (21).

11. Fermoir de ceinture (23) selon l'une la revendication 10, caractérisé en ce que l'évidement présente une surface d'appui (63) oblique par l'intermédiaire de laquelle une force est exercée sur le tenon (61) en cas de retenue.

12. Fermoir de ceinture (23) selon la revendication 11, caractérisé en ce que la surface d'appui (63) est prévue sur une section du boîtier (25), qui entoure en partie le tenon (61).

13. Fermoir de ceinture (23) selon l'une quelconque des revendications précédentes, caractérisé en ce que l'organe de fixation de câble (29) est enfoncé dans le boîtier.
